# EUROPEAN PATENT SPECIFICATION

(11) **EP 2 891 795 B1**
(45) Date of publication and mention of the grant of the patent: **07.02.2018**
(21) Application number: 14188979.0
(22) Date of filing: 15.10.2014
(51) Int. Cl.: F16H 61/40, F16H 39/02, F16H 57/04, F16H 61/4165

(54) **Hydraulic transmission, wind turbine power generating apparatus, and operation control method**
Hydraulikgetriebe, Windturbinengenerator und Betriebssverfahren dafür
Transmission hydraulique, éolienne et procédé de contrôle de fonctionnement associé

(30) Priority: 17.10.2013 JP 2013216088
(43) Date of publication of application: 08.07.2015
(73) Proprietor: MITSUBISHI HEAVY INDUSTRIES, LTD., Tokyo 108-8215 (JP)
(72) Inventor: Tsutsumi, Kazuhisa, TOKYO, 108-8215 (JP); Uchida, Michiya, TOKYO, 108-8215 (JP); Yamaguchi, Hiroyuki, TOKYO, 108-8215 (JP)
(74) Representative: Intès, Didier Gérard André

(56) References cited:
- WO-A1-2013/021670
- DE-A1- 4 313 025

## Description

### TECHNICAL FIELD

The present disclosure relates to a hydraulic transmission including a hydraulic pump and a hydraulic motor, a wind turbine power generating apparatus having the same, and an operation control method of the wind turbine power generating apparatus.

### BACKGROUND

In recent years, in consideration of the preservation of the global environment, renewable energy power generating apparatuses have become widely used, such as a wind turbine power generating apparatus using wind force and a current power generating apparatus using tidal current, river current, or ocean current. A renewable energy power generating apparatus commonly converts kinetic energy of wind, tidal current, ocean current or river current into rotation energy of a rotor, and then the speed of the rotation energy of the rotor is increased by a drive train and the rotation energy is inputted to a generator, thereby generating electric power.

Conventionally, as a drive train in such a renewable energy power generating apparatus, a gear box has been often used. With the increase in size of a renewable energy power generating apparatus, however, attraction is drawn to a renewable energy power generating apparatus in which a hydraulic transmission is employed in view of the weight and cost.

For instance, Document 1 discloses a wind turbine power generating apparatus using a hydraulic transmission including a hydraulic pump driven by rotation of a rotor and a hydraulic motor connected to a generator. In the hydraulic transmission of the wind turbine power generating apparatus, the hydraulic pump and the hydraulic motor are fluidically connected to each other via a high pressure line and a low pressure line. The high-pressure working oil pressurized by the hydraulic pump is supplied to the hydraulic motor through the high pressure oil line, and then the pressure of the working oil is converted into driving force of a generator in the hydraulic motor. Next, the low-pressure working oil discharged from the hydraulic motor is returned to the hydraulic pump through the low pressure oil line. The hydraulic pump includes a plurality of groups of a piston and a cylinder, and a cam for sliding the pistons in the cylinders periodically.
Document 2 discloses a hydrostatic-mechanical gear comprising a hydraulic pump being connected via supply and return pipes with a hydraulic motor and forming therewith a high pressure circuit, and a flushing slide valve attached to said supply and return pipes by connecting pipes so that, during operation of said hydrostatic-mechanical gear, heated oil is constantly removed from said high pressure circuit, via a flushing valve and is replaced with cooled oil. Document 3 discloses a renewal energy electric power generating apparatus which transmits the rotational energy of the rotor to a generator via the hydraulic transmission. In order to prevent the abrasion of the sliding members of the pump and motor, which arises according to friction, lubricating oil is supplied to such sliding members using the low pressure line. Document 3 shows a hydraulic transmission according to the preamble of claim 1 and also an operation control method according to the preamble of claim 11.

### Citation List

### Patent Literature

Document 1: US 2010/0032959
Document 2: DE 43 13 025
Document 3: WO2013/021670

### SUMMARY

In a hydraulic transmission described above, a boost pump is used to supply working oil to the low pressure line connecting the hydraulic pump and the hydraulic motor.

When the boost pump stops, working oil is no longer supplied to the low pressure line, and thus pressure decreases in the low pressure line. Then, in response to the pressure decrease in the low pressure line, the pressure also decreases in the working chambers of the hydraulic pump and the hydraulic motor communicating to the low pressure line.

When the boost pump abnormally stops due to trouble or blackout during operation of a hydraulic transmission, continuing the operation of the hydraulic pump and the motor with the decreased pressure in the low pressure line may cause a variety of problems due to the pressure decrease in the working chambers of the hydraulic pump and the hydraulic motor.

For instance, the pistons of the hydraulic pump and the hydraulic motor normally reciprocate periodically in the cylinders in accordance with the cam profile. However, when the pressure in the working chambers decreases, so-called piston jumping may occur. In this piston jumping phenomenon, a piston rises off the contacting surface between the piston and the cam surface. When the piston jumping occurs, the piston collides with the cam surface when contacting the cam for the next time, which may damage the piston or the cam.

Further, there is a case where a static-pressure pad is disposed at the sliding part between a piston and the cam to supply working oil from the working chambers to the static-pressure pad, the working oil being static-pressure fluid. In this case, when the pressure in the working chambers decreases with the pressure decrease in the low pressure line, the oil is not sufficiently supplied to the static-pressure pad, which may damage the static-pressure pad.

In order to prevent the above problems, it is necessary to stop the hydraulic pump and the hydraulic motor before the pressure in the low pressure line decreases in the event of abnormal stop of the boost pump.

At this time, particularly in a case of a large hydraulic transmission, the hydraulic pump and the hydraulic motor may not be stopped immediately because of inertia, and it may take several tens of seconds before the hydraulic pump and the hydraulic motor stop.

Thus, until the hydraulic pump and the hydraulic motor stop, it is desirable to retard the pressure decrease in the low pressure line (which results in pressure decrease in the working chambers of the hydraulic pump and the hydraulic motor) to prevent damage to the pistons or the like caused by the above described piston jumping and damage to the static-pressure pad due to insufficient oil supply. Prior art documents 1, 2 or 3 however, do not disclose nor suggest any problem or countermeasure with regard to the low pressure line for the case of abnormal stop of the boost pump.

The present invention was made in view of the above issues, and an object of at least one embodiment of the present invention is to provide a hydraulic transmission, a wind turbine power generating apparatus, and an operation control method for a wind turbine power generating apparatus which are capable of retarding pressure decrease in a low pressure line when a boost pump abnormally stops, the boost pump being provided for feeding working oil to the low pressure line.

A hydraulic transmission according to the present invention is defined by claim 1 and notably includes: a hydraulic pump configured to pressurize working oil; a hydraulic motor configured to be driven by the working oil pressurized by the hydraulic pump; a high pressure line which connects an outlet side of the hydraulic pump and an inlet side of the hydraulic motor; a low pressure line which connects an outlet side of the hydraulic motor and an inlet side of the hydraulic pump; a reservoir tank for storing the working oil, the reservoir tank being connected to the low pressure line; and a boost pump for feeding the working oil stored in the reservoir tank to the low pressure line. Also, the hydraulic transmission is configured such that the working oil is not supplied from the low pressure line to a bearing or a seal of at least one of the hydraulic pump or the hydraulic motor at least during abnormal stop of the boost pump.

It may be necessary to supply oil to bearings and seals of the hydraulic pump and the hydraulic motor for lubrication and cooling. Shutting off this oil supply may lead to shortage of lubrication and cooling, which may damage the bearings and the seals.

However, it may be considered that shutting off the oil supply to the bearings and the seals may not cause damage to the bearings and the seals if the shutoff lasts for only a short period of time such as several tens of seconds after the hydraulic pump and the hydraulic motor begin the stopping operation and before they actually stop.

According to the above hydraulic transmission, even though the working oil is supplied to the bearings or the seals of the hydraulic pump and the hydraulic motor from the low pressure line during normal operation of the boost pump, the working oil is not supplied from the low pressure line to at least one of a bearing or a seal of the hydraulic pump or the hydraulic motor when the boost pump abnormally stops due to trouble or blackout. Thus, it is possible to retard pressure decrease in the low pressure line, which may occur after the boost pump abnormally stops.

According to the invention, the hydraulic transmission further includes: a first branch line which is branched from the low pressure line and which is communicated with the bearing or the seal of the at least one of the hydraulic pump or the hydraulic motor; and a shutoff valve disposed in the first branch line and configured to control supply of the working oil to the bearing or the seal from the low pressure line via the first branch line. Also, the shutoff valve is configured to be in an open state during normal operation of the boost pump, and to be in a closed state during the abnormal stop of the boost pump so as to shut off the supply of the working oil to the bearing or the seal from the low pressure line via the first branch line.

In this case, the communicating state between the low pressure line and the bearing or the seal of the hydraulic pump or the hydraulic motor is switchable by opening and closing the shutoff valve disposed in the first branch line. During normal operation of the hydraulic transmission, the shutoff valve disposed in the first branch line is in the open state, so that oil is supplied to the bearing or the seal from the low pressure line. On the other hand, when the boost pump stops abnormally due to trouble or blackout, the shutoff valve is brought into the closed state, so that the oil supply from the low pressure line to the bearing or the seal is shut off. Thus, it is possible to retard the pressure decrease in the low pressure line after the boost pump abnormally stops.

In some embodiments, the shutoff valve is a pilot check valve configured to be operated by a pressure in the low pressure line serving as a pilot pressure. Also, the pilot check valve is configured to permit a flow to the bearing or the seal from the low pressure line via the first branch line when the pilot pressure is not less than a threshold value Pₜₕ, and to shut off the flow to the bearing or the seal from the low pressure line via the first branch line when the pilot pressure is less than the threshold value Pₜₕ.

In this case, if the pressure (pilot pressure) of the low pressure line is not less than the threshold value Pₜₕ, the shutoff valve is brought into the open state so that the oil supply is permitted to the bearing or the seal from the low pressure line via the first branch line. On the other hand, if the pressure (pilot pressure) of the low pressure line decreases to less than the threshold value Pₜₕ, the shutoff valve is brought into the closed state so as to shut off the oil supply to the bearing or the seal from the low pressure line via the first branch line.

Thus, if the threshold value Pₜₕ is set in assumption of the possible pressure decrease in the low pressure line which may occur when the boost pump abnormally stops, it is possible to appropriately operate the pilot check valve and to retard the pressure decrease in the low pressure line which may occur after the boost pump abnormally stops.

In some embodiments, the pilot check valve is configured to obtain the pilot pressure from a portion of the low pressure line, the portion being disposed immediately after the boost pump.

In this case, obtaining the pilot pressure from a portion immediately after the boost pump causes the operation state of the boost pump to be instantly reflected in the pilot-pressure change. Accordingly, it is possible to instantly respond to abnormal stop of the boost pump to bring the pilot check valve (shutoff valve) into the closed state quickly.

In some embodiments, the hydraulic transmission further includes: an oil supply path provided separately from the low pressure line, the oil supply path connecting the reservoir tank and the bearing or the seal of the at least one of the hydraulic pump or the hydraulic motor; and an oil supply pump disposed in the oil supply path for pumping the working oil to the bearing or the seal of the at least one of the hydraulic pump or the hydraulic motor from the reservoir tank via the oil supply path.

According to the above configuration, it is possible to supply the oil for lubrication and cooling to the bearing or the seal of the hydraulic pump or the hydraulic motor through the oil supply path and the oil supply pump provided separately from the low pressure line without passing through the low pressure line. Thus, even when the boost pump abnormally stops, it is possible to supply the oil without passing through the low pressure line and thus to prevent damage to the bearing or the seal.

Also, since the low pressure line is provided separately from the oil supply path, supplying the working oil to the bearing or the seal through the oil supply path during abnormal stop of the boost pump may not cause pressure decrease in the low pressure line. Thus, it is possible to prevent damage to the bearing or the seal while retarding the pressure decrease in the low pressure line which may occur after the boost pump abnormally stops.

In some embodiments, the oil supply pump is configured to be communicable with the hydraulic pump so as to cause the hydraulic pump to perform motoring operation temporarily.

According to the above configuration, the oil supply pump may also function as a pressure oil source for causing the hydraulic pump to perform motoring operation temporarily, in addition to pumping the working oil to the bearing or the seal from the reservoir tank through the oil supply path. Thus, it may not be necessary to additionally provide a pressure oil source for causing the hydraulic pump to perform motoring operation temporarily, which leads to reduction in size and cost of the hydraulic transmission.

In one embodiment, the oil supply pump is configured to cause the hydraulic pump to perform motoring operation in order to move a wind turbine rotor of the wind turbine power generating apparatus to a certain position when the wind turbine power generating apparatus having the hydraulic transmission serving as a drive train stops.

In some embodiments, the hydraulic transmission further includes a low pressure accumulator connected to the low pressure line and configured to reduce pressure fluctuation of the working oil in the low pressure line. The low pressure accumulator is configured to supply the working oil in the low pressure accumulator to the low pressure line during abnormal stop of the boost pump.

With the above configuration, the working oil having been stored in the low pressure accumulator during operation of the hydraulic transmission is supplied to the low pressure line when the boost pump abnormally stops. Thus, while the working oil stored in the low pressure accumulator is being supplied to the low pressure line, the pressure decrease in the low pressure line is suppressed, which makes it possible to further retard the pressure decrease in the low pressure line which may occur after the boost pump abnormally stops.

In some embodiments, the hydraulic pump or the hydraulic motor is configured to be capable of decreasing rotation speed to at least half of rotation speed in the normal operation in a period of time from when the boost pump abnormally stops to when the pressure of the low pressure line decreases to an initial charge pressure of the low pressure accumulator.

With the above configuration, it is possible to reduce the rotation speed of the hydraulic pump or the hydraulic motor to half the normal rotation speed in a period of time from when the boost pump abnormally stops to when all the working oil stored in the low pressure accumulator is supplied to the low pressure line. Thus, during this period of time, it is possible to suppress the pressure decrease in the low pressure line. Accordingly, it is possible to further retard the pressure decrease in the low pressure line which may occur after the boost pump abnormally stops.

Further, when the rotation speed of the hydraulic pump or the hydraulic motor is high, pressure decrease in the low pressure line has a large influence on the components of the hydraulic transmission such as the pistons and the static-pressure pad caused by piston jumping or insufficient oil supply, compared to when the rotation speed is low. Thus, the above configuration makes it possible to effectively prevent the damage to the components of the hydraulic transmission such as the pistons and the static-pressure pad due to pressure decrease in the low pressure line.

In some embodiments, the hydraulic transmission further includes: a high pressure accumulator connected to the high pressure line; a bypass flow path which connects the high pressure line and the low pressure line without the hydraulic pump and the hydraulic motor disposed therebetween; and a bypass shutoff valve disposed in the bypass flow path. Also, the bypass shutoff valve is configured to be in a closed state during the normal operation of the boost pump and to be in an open state so as to allow the working oil to flow from the high pressure line to the low pressure line passing through the bypass flow path during the abnormal stop of the boost pump.

With the above configuration, the bypass shutoff valve is in the closed state during normal operation of the boost pump, so that the flow of the working oil in the bypass flow path is shut off. On the other hand, when the boost pump abnormally stops, the bypass shutoff valve is brought into the open state, so that the working oil accumulated in the high pressure accumulator during operation of the hydraulic transmission is supplied to the low pressure line through the bypass flow path. Thus, while the working oil having been stored in the high pressure accumulator is being supplied to the low pressure line through the bypass flow path, the pressure decrease in the low pressure line is suppressed. Accordingly, it is possible to further retard the pressure decrease in the low pressure line which may occur after the boost pump abnormally stops.

In some embodiments, the hydraulic transmission further includes an auxiliary boost pump. The auxiliary boost pump is configured to start operation and suppress pressure decrease in the low pressure line when the boost pump stops abnormally.

In this case, even if the boost pump abnormally stops, operation of the auxiliary boost pump is started so that the pressure decrease in the low pressure line is suppressed. Thus, it is possible to further retard the pressure decrease in the low pressure line which may occur after the boost pump abnormally stops.

A wind turbine power generating apparatus, according to at least one embodiment of the present invention, includes a wind turbine rotor and a hydraulic transmission connected to the wind turbine rotor. The hydraulic transmission includes: a hydraulic pump configured to be driven by the wind turbine rotor to pressurize working oil; a hydraulic motor configured to be driven by the working oil pressurized by the hydraulic pump; a high pressure line which connects an outlet side of the hydraulic pump and an inlet side of the hydraulic motor; a low pressure line which connects an outlet side of the hydraulic motor and an inlet side of the hydraulic pump; a reservoir tank for storing the working oil, the reservoir tank being connected to the low pressure line; and a boost pump for feeding the working oil stored in the reservoir tank to the low pressure line. Also, the hydraulic transmission is configured such that the working oil is not supplied from the low pressure line to a bearing or a seal of at least one of the hydraulic pump or the hydraulic motor at least during abnormal stop of the boost pump.

According to the above wind turbine power generating apparatus, in the hydraulic transmission, even though the working oil is supplied to a bearing or a seal of the hydraulic pump or the hydraulic motor from the low pressure line during normal operation of the boost pump, the working oil is not supplied to at least one of the bearing or the seal of the hydraulic pump or the hydraulic motor when the boost pump abnormally stops due to trouble or blackout. Thus, it is possible to retard pressure decrease in the low pressure line, which may occur after the boost pump abnormally stops.

In some embodiments, the hydraulic pump is configured to be capable of decreasing rotation speed to half of rotation speed in the normal operation within 15 seconds after the boost pump stops abnormally. Also, the hydraulic transmission is configured to maintain the pressure in the low pressure line at not less than a threshold value for a period of time from when the boost pump stops abnormally to at least when the rotation speed of the hydraulic pump decreases to half of the rotation speed in the normal operation.

In this case, the pressure decrease in the low pressure line is suppressed at least until the rotation speed of the hydraulic pump decreases by half. That is, it is suppressed during a period of time in which the rotation speed of the hydraulic pump is relatively high and has a large influence on the components of the hydraulic transmission such as the pistons and the static-pressure pad caused by piston jumping or insufficient oil supply. As a result, it is possible to effectively prevent damage to components of the hydraulic transmission such as the pistons and the static-pressure pad due to pressure decrease in the low pressure line.

In some embodiments, the hydraulic motor is configured to be capable of decreasing rotation speed to half of rotation speed in the normal operation within 60 seconds after the boost pump stops abnormally. The hydraulic transmission is configured to maintain the pressure in the low pressure line at not less than a threshold value for a period of time from when the boost pump stops abnormally to at least when the rotation speed of the hydraulic motor decreases to half of the rotation speed in the normal operation.

In this case, the pressure decrease in the low pressure line is suppressed at least until the rotation speed of the hydraulic motor decreases by half. That is, it is suppressed during a period of time in which the rotation speed of the hydraulic motor is relatively high and has a large influence on the components of the hydraulic transmission such as the pistons and the static-pressure pad caused by piston jumping or insufficient oil supply. As a result, it is possible to effectively prevent damage to components of the hydraulic transmission such as the pistons and the static-pressure pad due to pressure decrease in the low pressure line.

An operation control method for a wind turbine power generating apparatus according to at least one embodiment of the present invention is for a wind turbine power generating apparatus including a wind turbine rotor and a hydraulic transmission connected to the wind turbine rotor. The hydraulic transmission includes: a hydraulic pump configured to be driven by the wind turbine rotor to pressurize working oil; a hydraulic motor configured to be driven by the working oil pressurized by the hydraulic pump; a high pressure line which connects an outlet side of the hydraulic pump and an inlet side of the hydraulic motor; a low pressure line which connects an outlet side of the hydraulic motor and an inlet side of the hydraulic pump; a reservoir tank for storing the working oil, the reservoir tank being connected to the low pressure line; and a boost pump for feeding the working oil stored in the reservoir tank to the low pressure line. The operation control method includes: a detecting step of detecting abnormal stop of the boost pump; and a speed-decreasing step of decreasing rotation speed of the hydraulic pump or the hydraulic motor while the working oil is not supplied from the low pressure line to a bearing or a seal of at least one of the hydraulic pump or the hydraulic motor, after detecting the abnormal stop of the boost pump in the detecting step.

According to the above method, in the hydraulic transmission, even though the working oil is supplied to the bearing or the seal of the hydraulic pump or the hydraulic motor from the low pressure line during normal operation of the boost pump, the working oil is not supplied to at least one of the bearing or the seal of the hydraulic pump or the hydraulic motor when the boost pump abnormally stops due to trouble or blackout. Thus, it is possible to retard pressure decrease in the low pressure line, which may occur after the boost pump abnormally stops.

Further, the speed of the hydraulic pump or the hydraulic motor is decreased in a state where the working oil is not supplied from the low pressure line to the bearing or the seal of the hydraulic pump or the hydraulic motor, i.e., in a state where the pressure decrease in the low pressure line is suppressed. Thus, it is possible to stop the hydraulic pump and the hydraulic motor while suppressing the damage to the pistons and the static-pressure pad due to piston jumping or insufficient oil supply.

In some embodiments, in the speed-decreasing step, displacement of each of the hydraulic pump and the hydraulic motor is set to a minimum value while controlling pitch angle of the wind turbine rotor so that aerodynamic braking force is applied to the wind turbine rotor.

In this case, the pitch angle of the wind turbine rotor is controlled so as to apply aerodynamic braking force to the wind turbine rotor, which makes it possible to reduce the speed of the hydraulic pump. Further, setting the displacement of each of the hydraulic pump and the hydraulic motor to a minimum value makes it possible to reduce the speed of the hydraulic pump and the hydraulic motor.

According to one embodiment of the present invention, it is possible to retard pressure decrease in a low pressure line when a boost pump for feeding working oil to the low pressure line stops abnormally.

### BRIEF DESCRIPTION OF DRAWINGS

FIG. 1 is a schematic diagram of a wind turbine power generating apparatus having a hydraulic transmission according to one embodiment.
FIG. 2 is a schematic diagram of a wind turbine power generating apparatus having a hydraulic transmission according to one embodiment.
FIG. 3 is a schematic diagram of a wind turbine power generating apparatus having a hydraulic transmission according to one embodiment.
FIG. 4 is a schematic diagram of a wind turbine power generating apparatus having a hydraulic transmission according to one embodiment.
FIG. 5 is a schematic diagram of a wind turbine power generating apparatus having a hydraulic transmission according to one embodiment.
FIG. 6 is a flowchart of an operation control method for a wind turbine power generating apparatus according to one embodiment.
FIG. 7 is a diagram of an exemplary configuration of a pitch drive mechanism.
FIG. 8 is a diagram of an exemplary configuration of a hydraulic pump.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

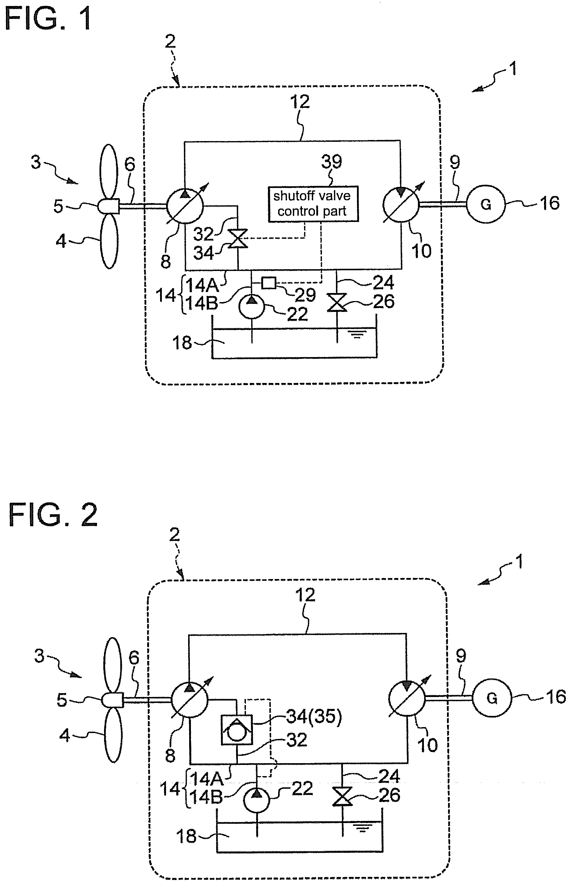

FIGs. 1 to 5 are each a schematic diagram of a wind turbine power generating apparatus having a hydraulic transmission according to one embodiment.

As illustrated in FIGs. 1 to 5, the wind turbine power generating apparatus 1 mainly includes a wind turbine rotor 3 which rotates upon receiving wind, a hydraulic transmission 2 which increases rotation speed of the wind turbine rotor 3, and a generator 16 which generates electric power.

The wind turbine rotor 3 includes at least one blade 4, a hub 5 to which the blades 4 are attached, and a rotational shaft 6 coupled to the hub 5. With this configuration, the whole wind turbine rotor 3 rotates by the wind force received by the blades 4, and the rotation is inputted from the rotational shaft 6 to the hydraulic transmission 2. The rotation inputted from the rotational shaft 6 is accelerated by the hydraulic transmission 2, and then the rotation is transmitted to the generator 16 via a rotation shaft 9.

The hydraulic transmission 2 includes a hydraulic pump 8 of a variable displacement type, a hydraulic motor 10 of a variable displacement type, a high pressure line 12 and a low pressure line 14 disposed between the hydraulic pump 8 and the hydraulic motor 10, a reservoir tank 18 for storing working oil, and a boost pump 22 for feeding working oil stored in the reservoir tank to the low pressure line 14.

As illustrated in FIG. 1, the hydraulic pump 8 and the hydraulic motor 10 may be of a variable displacement type which can adjust the displacement. The hydraulic pump 8 is driven by rotation of the wind turbine rotor 3 to pressurize of the working oil. On the other hand, the hydraulic motor 10 is configured to be driven by the working oil pressurized by the hydraulic pump 8.

The outlet side of the hydraulic pump 8 is connected to the inlet side of the hydraulic motor 10 through the high pressure line 12, while the inlet side of the hydraulic pump 8 is connected to the outlet side of the hydraulic motor 10 through the low pressure line 14. The working oil (high pressure oil) discharged from the hydraulic pump 8 flows into the hydraulic motor 10 through the high pressure line 12, and then drives the hydraulic motor 10. The working oil (low pressure oil) having performed work in the hydraulic motor 10 flows into the hydraulic pump 8 through the low pressure line 14, has its pressure increased by the hydraulic pump 8, and then flows into the hydraulic motor 10 again through the high pressure line 12.

In some embodiments, the low pressure line 14 as illustrated in FIG. 1 includes a main-stream line 14A connecting the outlet side of the hydraulic motor 10 and the inlet side of the hydraulic pump 8, and a supplementary line 14B branched from the main-stream line 14A. A reservoir tank 18 is connected to the main-stream line 14A via the supplementary line 14B.

The reservoir tank 18 stores supplementary working oil. This working oil stored in the reservoir tank 18 is pumped up by the boost pump 22 disposed in the supplementary line 14B and then supplied to the low pressure line 14 (main-stream line 14A). At this time, impurity substances included in the working oil supplied to the low pressure line 14 (main-stream line 14A) may be removed by an oil filter (not illustrated) disposed in the supplementary line 14B. Supplying the supplementary working oil to the low pressure line 14 (main-stream line 14A) makes it possible to maintain the amount of working oil circulating in the hydraulic transmission 2 even in case of leakage of the working oil. Further, a return line 24 is disposed between the main-stream line 14A and the reservoir tank 18, and a relief valve 26 is disposed in the return line 24. As a result, during normal operation of the hydraulic transmission 2 (during normal operation of the boost pump 22), the pressure in the low pressure line 14 is maintained close to a setting pressure of the relief valve 26.

Also, a pressure sensor 29 for measuring pressure in the low pressure line 14 may be disposed at the downstream side of the boost pump 22 in the low pressure line 14. In the exemplary embodiment illustrated in FIG. 1, a pressure sensor 29 is disposed at the downstream side of the boost pump 22 in the supplementary line 14B, so that the pressure sensor 29 can measure the pressure in the supplementary line 14B.

The hydraulic transmission 2 is configured such that, during normal operation, oil for lubrication or cooling is supplied to the bearing and/or seal (oil-supply target part) of the hydraulic pump 8 and/or the hydraulic motor 10.

For instance, in the exemplary embodiment illustrated in FIGs. 1 and 2, the hydraulic transmission 2 includes a first branch line 32 branched from the low pressure line 14 to communicate with an oil-supply target part of the hydraulic pump 8. The first branch line 32 includes a shutoff valve 34 for controlling the supply of the working oil supplied from the low pressure line 14 to the bearing via the first branch line 32. Also, the communicating state between the bearing of the hydraulic pump 8 and the low pressure line 14 via the first branch line 32 is switchable by opening and closing the shutoff valve 34. During normal operation, the shutoff valve 34 is in an open state, so that the oil is supplied to the bearing of the hydraulic pump 8 from the low pressure line 14 via the first branch line 32.

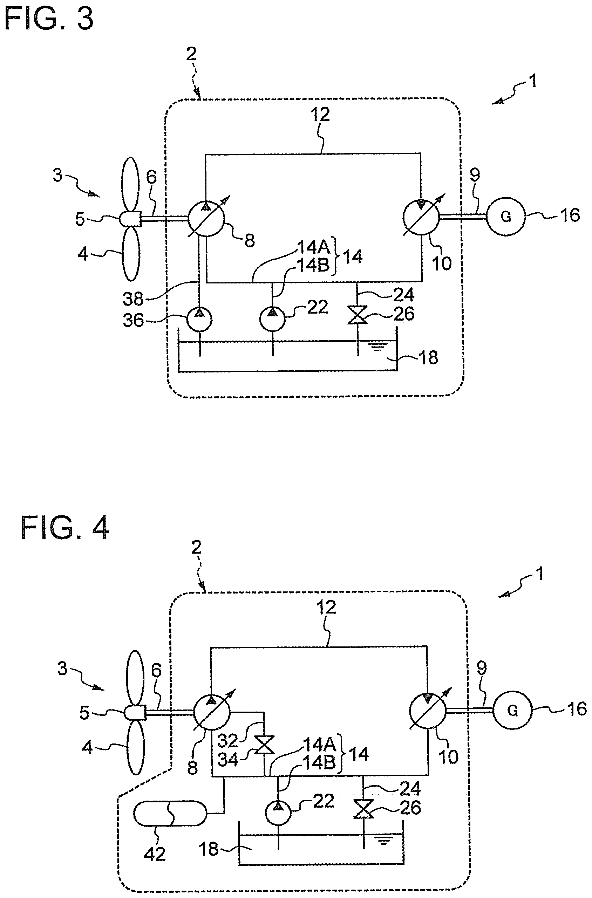

Further, in the exemplary embodiment illustrated in FIG. 3, the hydraulic transmission 2 includes an oil supply path 38 provided separately from the low pressure line 14, the oil supply path 38 connecting the bearing of the hydraulic pump 8 and the reservoir tank 18. The oil supply path 38 includes an oil supply pump 36 for pumping the working oil to the bearing of the hydraulic pump 8 from the reservoir tank 18 through the oil supply path 38. As a result, the working oil stored in the reservoir tank 18 is constantly supplied to the bearing of the hydraulic pump 8 through the oil supply path 38 without passing through the low pressure line 14.

When the boost pump 22 abnormally stops, there is a risk of pressure decrease in the low pressure line 14 due to leakage of the working oil supplied to a working chamber from the low pressure line 14 leaking to a cam chamber, or due to the supply of the working oil to the oil supply target part of the hydraulic pump 8 and/or the hydraulic motor 10 from the low pressure line 14, for instance.

Thus, the hydraulic transmission 2 is configured such that the working oil is not supplied to the bearing of the hydraulic pump 8 from the low pressure line 14 during abnormal stop of the boost pump 22.

For instance, in the exemplary embodiment illustrated in FIGs. 1 and 2, the shutoff valve 34 is in a closed state during abnormal stop of the boost pump 22, so as to shut off the supply of the working oil to the bearing of the hydraulic pump 8 from the low pressure line 14 via the first branch line 32. Thus, it is possible to retard the pressure decrease in the low pressure line 14 which may occur after the boost pump 22 abnormally stops.

Further, in the exemplary embodiment illustrated in FIG. 3, providing the oil supply path 38 and the oil supply pump 36 makes it possible to supply the working oil for lubrication and cooling to the bearing of the hydraulic pump 8 without passing through the low pressure line 14. Thus, the oil for lubrication and cooling is not supplied to the bearing of the hydraulic pump 8 through the low pressure line 14 during abnormal stop of the boost pump 22. Accordingly, supplying the working oil to the bearing of the hydraulic pump 8 through the oil supply path 38 during abnormal stop of the boost pump 22 does not by itself cause the pressure decrease in the low pressure line 14. As a result, it is possible to retard the pressure decrease in the low pressure line 14 after the boost pump abnormally stops. Further, even if the boost pump 22 stops abnormally, it is possible to prevent damage to the bearing of the hydraulic pump 8 by supplying the oil for lubrication and cooling without passing through the low pressure line 14.

Further, in the exemplary embodiment illustrated in FIG. 1, a shutoff-valve control part 39 controls the shutoff valve 34 to be open and closed on the basis of detection signals sent from a pressure sensor 29 disposed at the downstream side of the boost pump 22 in the low pressure line 14. For instance, the shutoff-valve control part 39 is configured to control the shutoff valve 34 to be open and closed so that the flow from the low pressure line 14 to the oil supply target part of the hydraulic pump 8 via the first branch line 32 is permitted when pressure P in the low pressure line 14 detected by the pressure sensor 29 is not less than the threshold value, and so that the flow from the low pressure line 14 to the oil supply target part of the hydraulic pump 8 via the first branch line 32 is shut off when the pressure P is less than the threshold value.

The threshold value here of the pressure P is a reference for the opening and closing control of the shutoff valve 34 and set in anticipation of the possible pressure decrease in the low pressure line 14 during abnormal stop of the boost pump 22. That is, the threshold value of the pressure P is set at such a value that enables discrimination between normal operation and abnormal stop of the boost pump 22.

The shutoff-valve control part 39 controls opening and closing operation of the shutoff valve 34 based on the detection results of the pressure sensor 29 as described above. Thus, the shutoff valve 34 is closed in response to the decrease in the pressure P after the boost pump 22 abnormally stops, which makes it possible to prevent leakage of the working oil to the oil supply target part from the low pressure line 14 via the first branch line 32. As a result, it is possible to retard the pressure decrease in the low pressure line 14 which may occur after the boost pump 22 abnormally stops.

Further, in the exemplary embodiment illustrated in FIG. 1, the pressure sensor 29 is configured to measure pressure P at a portion from the low pressure line 14 immediately after the boost pump 22, i.e., pressure P between the boost pump 22 and the meeting point where the main-stream line 14A merges with the supplementary line 14B in which the boost pump 22 is disposed.

In this case, the pilot pressure is obtained from a portion immediately after the boost pump 22. Thus, the operation state of the boost pump 22 is instantly reflected in the measurement result of the pressure sensor 29. As a result, it is possible to instantly respond to abnormal stop of the boost pump 22 and to quickly bring the shutoff valve 34 into the closed state by the shutoff-valve control part 39.

Still further, in the exemplary embodiment illustrated in FIG. 2, the shutoff valve 34 is a pilot check valve 35 configured to operate with the pressure in the low pressure line 14 as its pilot pressure. The pilot check valve 35 is configured to permit the flow from the low pressure line 14 to the oil supply target part of the hydraulic pump 8 via the first branch line 32 when the pilot pressure is not less than the threshold value Pₜₕ, and to shut off the flow from the low pressure line 14 to the oil supply target part of the hydraulic pump 8 via the first branch line 32 when the pilot pressure is less than the threshold value Pₜₕ.

The threshold value Pₜₕ of the pilot pressure is set in anticipation of the possible pressure decrease of the low pressure line 14 which may occur during abnormal stop of the boost pump 22. That is, the threshold value Pₜₕ is set such that the pilot pressure (pressure in the low pressure line) is not less than Pₜₕ during normal operation of the boost pump 22 and the pilot pressure is less than Pₜₕ during abnormal stop of the boost pump 22.

In this way, the pilot pressure is not less than the threshold value Pₜₕ and the pilot check valve is in the open state during normal operation of the boost pump 22, and thus the oil is supplied to the oil supply target part of the hydraulic pump 8 from the low pressure line 14 via the first branch line 32.

Further, during abnormal stop of the boost pump 22, the pilot pressure (pressure in the low pressure line) decreases to less than the threshold value Pₜₕ and the pilot check valve 35 is brought into the closed state, and thus the supply of the working oil to the oil supply target part of the hydraulic pump 8 from the low pressure line 14 via the first branch line 32 is shut off. As a result, it is possible to retard the pressure decrease in the low pressure line 14 which may occur after the boost pump 22 abnormally stops.

In the exemplary embodiment illustrated in FIG. 2, the pilot check valve 35 obtains its pilot pressure from a portion from the low pressure line 14 immediately after the boost pump 22, i.e., from a portion between the boost pump 22 and the meeting point where the main-stream line 14A merges with the supplementary line 14B in which the boost pump 22 is disposed.

In this case, the pilot pressure is obtained from a portion immediately after the boost pump 22. Thus, the operation state of the boost pump 22 is instantly reflected in the change in the pilot pressure. As a result, it is possible to instantly respond to the abnormal stop of the boost pump 22 and to quickly bring the pilot check valve 35 (shutoff valve 34) into the closed state.

In a case where a non-return valve is disposed at the downstream side of the boost pump 22 in the supplementary line 14B, the non-return valve permitting only the flow from the boost pump 22 to the main-stream line 14A, the pilot check valve 35 may obtain its pilot pressure from a portion between the boost pump 22 and the non-return valve. In a case where an oil filter for removing impurity substances included in the working oil is disposed at the downstream side of the boost pump 22 in the supplementary line 14B, the pilot check valve 35 may obtain its pilot pressure from a portion between the boost pump 22 and the oil filter.

In the exemplary embodiment illustrated in FIG. 3, the oil supply path 38 and the oil supply pump 36 for supplying the working oil to the oil supply target part may be configured to be usable as an oil flow path and a pressure oil source, respectively, for causing the hydraulic pump 8 to carry out motoring operation (motoring) temporarily. Specifically, the oil supply path 38 is configured capable of bringing the reservoir tank 18 into communication with the hydraulic chambers of the hydraulic pump 8, and the oil supply pump 36 may be configured capable of supplying pressurized oil to the hydraulic chambers of the hydraulic pump through the oil supply path 38.

Motoring is carried out by the hydraulic pump 8, for instance, when moving the wind turbine rotor 3 to a certain angular position for maintenance of the wind turbine power generating apparatus 1, or when moving the rotation shaft of the hydraulic pump 8 to a certain angular position for maintenance of the hydraulic pump 8.

As a result, it is possible to make the oil supply pump 36 to function as a pressurized oil source for causing the hydraulic pump 8 to temporarily perform motoring operation, in addition to pumping the working oil to the oil supply target part of the hydraulic pump 8 from the reservoir tank 18 through the oil supply path 38. Thus, it may be unnecessary to additionally provide a pressurized oil source for causing the hydraulic pump 8 to temporarily perform motoring operation, which leads to reduction in the size and cost of the hydraulic transmission 2.

In some embodiments, the hydraulic transmission 2 illustrated in FIG. 4 includes a low pressure accumulator 42 connected to the low pressure line 14 for suppressing pressure fluctuation of the working oil in the low pressure line 14. The low pressure accumulator 42 is configured to supply the working oil accumulated in the low pressure accumulator 42 to the low pressure line 14 during abnormal stop of the boost pump 22.

Further, the low pressure accumulator 42 may be, for instance, of a piston type or a bladder type in which a deformable bladder is used to separate gas and the working oil from each other.

In the present embodiment, an initial charge pressure of the low pressure accumulator 42 is set such that the working oil is accumulated in the low pressure accumulator 42 while the hydraulic transmission 2 is operating normally. Then, when the boost pump 22 abnormally stops, the working oil accumulated in the low pressure accumulator 42 is supplied to the low pressure line 14 as the pressure in the low pressure line 14 begins to decrease, and all this time the pressure in the low pressure line 14 is maintained close to the initial charge pressure. Accordingly, the pressure decrease in the low pressure line 14 which may occur after the boost pump 22 abnormally stops is even more retarded.

Although the exemplary embodiment illustrated in FIG.4, similarly to the embodiments illustrated in FIGs. 1 and 2, includes halting the supply of the working oil from the low pressure line 14 to the oil supply target part of the hydraulic pump 8 during abnormal stop of the boost pump 22 via the first branch line 32 and the shutoff valve 34, the working oil may be supplied to the oil supply target part from the oil supply pump 36 regardless of the operation state of the boost pump 22, similarly to the embodiment illustrated in FIG. 3.

Meanwhile, after all the working oil in the low pressure accumulator 42 has been supplied to the low pressure line 14, no more working oil is supplied and thus the pressure in the low pressure line 14 decreases. Thus, the capacity of the low pressure accumulator 42 may be set so that the working oil can be supplied to the low pressure line 14 long enough to suppress the damage to the pistons and the static-pressure pad due to piston jumping or insufficient oil supply after the boost pump 22 abnormally stops.

For instance, it is desirable to increase the capacity of the low pressure accumulator 42 so as to enable supplying the working oil to the low pressure line 14 from the low pressure accumulator 42 until the rotation speed of the hydraulic pump 8 and the hydraulic motor 10 becomes such that it is possible to suppress the damage to the pistons and the static-pressure pad due to piston jumping or insufficient oil supply.

In one embodiment, the hydraulic pump 8 is configured such that the rotation speed can decrease at least to half the rotation speed in the normal operation within a period of time from when the boost pump 22 abnormally stops to when the pressure in the low pressure line 14 decreases to the initial charge pressure of the low pressure accumulator 42. For instance, the low pressure accumulator 42 has such a capacity that the working oil can be supplied to the low pressure line 14 at least until the rotation speed of the hydraulic pump 8 falls by half from the rotation speed in the normal operation.

With this configuration, it is possible to decrease the rotation speed of the hydraulic pump 8 or the hydraulic motor 10 to half the normal operation speed after the boost pump 22 abnormally stops and before all the working oil accumulated in the low pressure accumulator 42 is supplied to the low pressure line 14. Thus, all this time, it is possible to suppress the pressure decrease in the low pressure line 14. Accordingly, it is possible to further retard the pressure decrease in the low pressure line 14 which may occur after the boost pump 22 abnormally stops.

Further, when the rotation speed of the hydraulic pump 8 or the hydraulic motor 10 is high, pressure decrease in the low pressure line 14 has a large influence caused by piston jumping or insufficient oil supply to affect the components of the hydraulic transmission 2 such as the pistons and the static-pressure pad, compared to when the rotation speed is low. Thus, the above configuration makes it possible to effectively prevent damage to components of the hydraulic transmission 2 such as the pistons and the static pressure pad due to pressure decrease in the low pressure line 14.

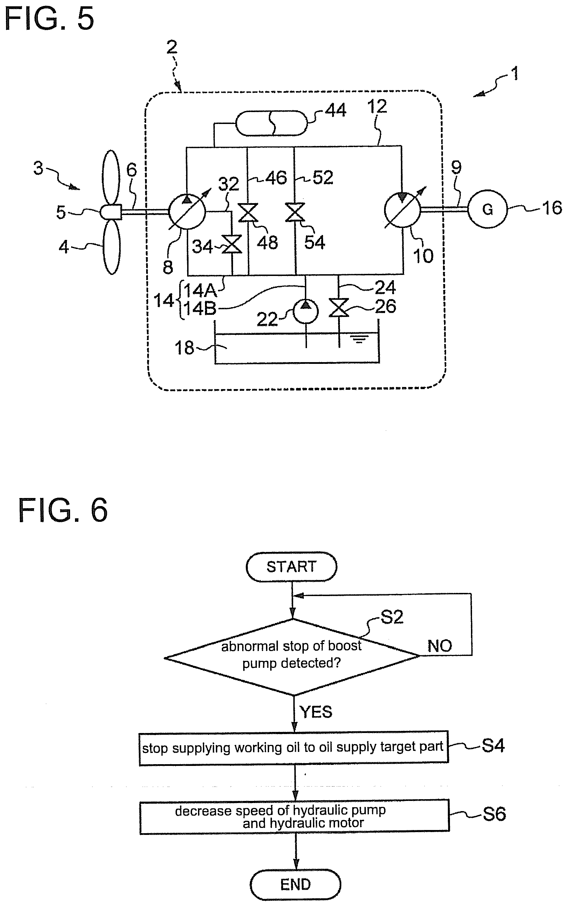

In the exemplary embodiment illustrated in FIG. 5, the hydraulic transmission 2 further includes a high pressure accumulator 44 connected to the high pressure line 12, and a bypass flow path 46 connecting the high pressure line 12 and the low pressure line 14 without the hydraulic pump 8 and the hydraulic motor 10 being interposed. A bypass shutoff valve 48 is disposed in the bypass flow path 46.

The bypass shutoff valve 48 is configured to be in a closed state during normal operation of the boost pump 22 and to be in an open state during abnormal stop of the boost pump 22 so as to allow the working oil to flow from the high pressure line 12 to the low pressure line 14 through the bypass flow path 46. The bypass shutoff valve 48 may be an electromagnetic valve or a pilot check valve which is closed in response to pressure decrease in the low pressure line 14. For instance, the bypass shutoff valve 48 may be an electromagnetic valve which is controlled to open or close on the basis of measurement results of the pressure sensor 29 (see FIG. 1) or a pilot check valve which operates with the pressure of the low pressure line 14 as its pilot pressure.

Further, for instance, the high pressure accumulator 44 may be of a piston type or a bladder type in which a deformable bladder is used to separate gas and the working oil from each other. Also, a bypass flow path 52 that bypasses the hydraulic motor 10 may be disposed between the high pressure line 12 and the low pressure line 14, the bypass flow path 52 including a relief valve 54 which maintains the pressure of the working oil in the high pressure line 12 at the setting pressure or lower.

The high pressure accumulator 44 is configured to accumulate the extra portion of the high pressure oil (working oil) discharged to the high pressure line 12 from the hydraulic pump 8 during normal operation of the hydraulic transmission 2. When the high pressure oil has been accumulated until it reaches the upper limit of the capacity of the high pressure accumulator 44 and the pressure of the working oil in the high pressure line 12 has increased to the setting pressure of the relief valve 54, the relief valve 54 automatically opens. As a result, it is possible to feed the high pressure oil to the low pressure line 14 through the bypass flow path 52 to maintain the pressure of the high pressure line 12 within an appropriate range when the pressure in the high pressure line 12 has increased excessively during normal operation of the hydraulic transmission 2.

In the present embodiment, the above described bypass flow path 46 and the bypass shutoff valve 48 are disposed between the high pressure line 12 and the low pressure line 14 separately from the bypass flow path 52 and the relief valve 54.

The bypass shutoff valve 48 is in a closed state during normal operation of the boost pump 22, so as to shut off the flow of the working oil in the bypass flow path 46. On the other hand, when the boost pump 22 abnormally stops, the bypass shutoff valve 48 is brought into an open state, so that the working oil accumulated in the high pressure accumulator 44 during operation of the hydraulic transmission 2 is supplied to the low pressure line 14 passing through the bypass flow path 46. Thus, while the working oil accumulated in the high pressure accumulator 44 is being supplied to the low pressure line 14 through the bypass flow path 46, the pressure decrease in the low pressure line 14 is suppressed. Accordingly, it is possible to further retard the pressure decrease in the low pressure line 14 which may occur after the boost pump 22 abnormally stops.

A high pressure accumulator of a wind turbine power generating apparatus normally has larger capacity than that of a low pressure accumulator due to a function of so called Low Voltage Ride-Through (LVRT) for maintaining the level of the output without disconnecting, as far as possible, a wind turbine power generating apparatus from a utility grid to which the wind turbine power generating apparatus is connected, even if the electric voltage of the utility grid decreases. Therefore, it is possible to maintain the pressure in the low pressure line 14 for a relatively long time by providing the bypass flow path 46 and the bypass shutoff valve 48 between the high pressure line 12 and the low pressure line 14 and bringing this bypass shutoff valve 48 into an open state when the boost pump 22 abnormally stops.

Next, the operation control method for a wind turbine power generating apparatus according to the embodiment will be schematically described. FIG. 6 is a flowchart of an operation control method for a wind turbine power generating apparatus according to one embodiment.

As illustrated in FIG. 6, first of all, abnormal stop of the boost pump 22 is detected (step S2). If abnormal stop of the boost pump 22 is not detected in step S2 (determination result "NO" in step S2), step 2 is repeated. On the other hand, if abnormal stop of the boost pump 22 is detected in step S2 (determination result "YES" in step S2), the method proceeds to step S4.

Further, abnormal stop of the boost pump 22 may be detected for the wind turbine power generating apparatus 1 having configuration illustrated in FIG. 1, for instance, by comparing the measurement value of pressure P in the low pressure line 14 (supplementary line 14B) obtained by the pressure sensor 29 with a threshold value. Alternatively, in a case of the wind turbine power generating apparatus 1 illustrated in FIG. 2, abnormal stop of the boost pump 22 may be detected by comparing the pressure in the low pressure line 14 (supplementary line 14B) used as the pilot pressure for the pilot check valve 35 with the setting pressure (threshold value Pₜₕ) of the pilot check valve 35. In both cases, it is determined that the boost pump 22 is normally operating when the measurement value of pressure P obtained by the pressure sensor 29 or the pilot pressure obtained by the pilot check valve 35 is not less than the threshold value, while it is determined that the boost pump 22 has stopped abnormally when the measurement value of pressure P or the pilot pressure is less than the threshold value.

Subsequently, in step S4, supplying the working oil from the low pressure line 14 to the oil supply target part of at least one of the hydraulic pump 8 or the hydraulic motor 10 is halted.

For instance, for the wind turbine power generating apparatus 1 with the configuration illustrated in FIG. 1, the shutoff valve 34 is closed on the basis of the measurement results of the pressure sensor 29 under control of the shutoff valve control part 39, so that the supply of the working oil from the low pressure line 14 to the oil supply target part of the hydraulic pump 8 via the first branch line 32 is stopped. Alternatively, in a case of the wind turbine power generating apparatus 1 illustrated in FIG. 2, the pilot check valve 35 (shutoff valve 34) is closed in response to the pilot pressure (pressure of the low pressure line 14) becoming lower than the threshold value Pₜₕ, so as to stop supplying the working oil from the low pressure line 14 to the oil supply target part of the hydraulic pump 8 via the first branch line 32.

Next, the method proceeds to step 6, where the rotation speed of the hydraulic pump 8 and the hydraulic motor 10 is decreased while halting the supply of the working oil from the low pressure line 14 to the oil supply target part.

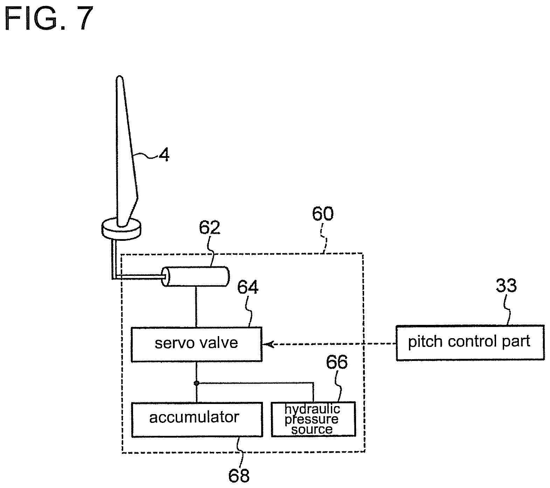

In one embodiment, in order to decrease the rotation speed of the hydraulic pump 8 and the hydraulic motor 10, the pitch drive mechanism 60 illustrated in FIG. 7 is used to control the pitch angle of the wind turbine rotor 3, thereby applying aerodynamic braking force to the wind turbine rotor 3.

FIG. 7 is a diagram of an exemplary configuration of a pitch drive mechanism. The pitch drive mechanism 60 illustrated in FIG. 7 includes a hydraulic cylinder 62, a servo valve 64, a hydraulic pressure source 66, and an accumulator 68, and is accommodated in a hub which also accommodates, for instance, the hydraulic transmission 2 of the wind turbine power generating apparatus 1 illustrated in FIG. 1. The servo valve 64 adjusts the amount of the high pressure oil supplied to the hydraulic cylinder 62 under control of the pitch control part 33 so that the pitch angle of the blades 4 becomes a desired value, the high pressure oil including high pressure oil generated by the hydraulic pressure source 66 and high pressure oil accumulated in the accumulator 68. The rotation speed of the hydraulic pump 8 is decreased by controlling the pitch drive mechanism 60 by the pitch control part 33 to adjust the pitch angle of the blades 4 so as to decrease the speed of the rotor 3.

Also, in addition to applying aerodynamic braking force to the wind turbine rotor 3 using the pitch drive mechanism 60, the displacement of the hydraulic pump 8 and the hydraulic motor 10 may be minimized so as to decrease the rotation speed of the hydraulic pump 8 and the hydraulic motor 10.

Now, a procedure of adjusting the displacement of the hydraulic pump 8 in one embodiment will be described.

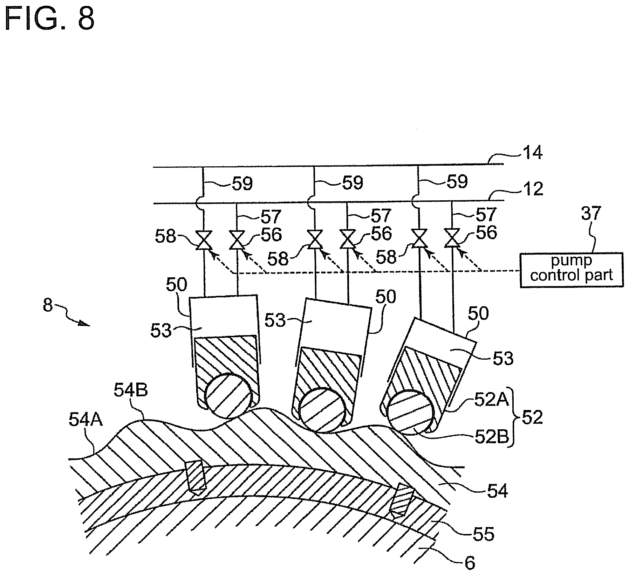

FIG. 8 is a diagram of an exemplary configuration of a hydraulic pump. As illustrated in FIG. 8, the hydraulic pump 8 includes a plurality of working chambers 53 each of which is formed by a cylinder 50 and a piston 52, a cam 54 having a cam curved surface engaging with the pistons 52, and a high pressure valve 56 and a low pressure valve 58 disposed corresponding to each working chamber 53. In some embodiments, each piston 52 includes a piston body 52A which slides in a corresponding cylinder 50, and a piston roller 52B attached to the piston body 52A and engaged with the cam curved surface of the cam 54 in view of smoothly operating the piston 52 in accordance with the cam curved surface of the cam 54. The cam 54 is mounted to the outer circumferential face of the rotational shaft 6 via a cam attachment base 55. A high pressure valve 56 is disposed in a high pressure communication path 57 provided between each working chamber 53 and the high pressure line 12. On the other hand, a low pressure valve 58 is disposed in a low pressure communication path 59 between each working chamber 53 and the low pressure line 14. The timing for opening and closing the high pressure valves 56 and the low pressure valves 58 is controlled by the pump control part 37.

In order to minimize the displacement of the hydraulic pump 8 having the above configuration, the pump control part 37 may control the high pressure valves 56 and the low pressure valves 58 so that all working chambers 53 of the hydraulic pump 8 become non-active chambers. In one embodiment, the pump control part 37 controls the valves in each working chamber 53 to maintain a state in which the high pressure valve 56 is closed and the low pressure valve 58 is open in a cycle so that pressure of the working oil is not increased. In a single cycle, the piston 52 rises from the bottom dead center, reaches the top dead center, and then returns to the bottom dead center again.

Although the above description is related to a configuration of the hydraulic pump 8 and a technique of minimizing the displacement thereof, similar configuration and technique may be applied to the hydraulic motor 10. Thus, the description for the hydraulic motor 10 is omitted.

In some embodiments, in step S6, load current is continuously transmitted to an armature of the generator 16 so that electromagnetic torque is generated in the generator 16 even after the boost pump 22 abnormally stops. As a result, when the boost pump 22 abnormally stops, it is possible to quickly decrease the speed of the rotation shaft of the hydraulic motor 10 by applying the electromagnetic torque of the generator 16 to the rotation shaft of the hydraulic motor 10 while minimizing the displacement to reduce mechanical energy inputted into the rotation shaft of the hydraulic motor 10.

Further, in a case where the boost pump 22 is receiving electric supply from the grid, an abnormal event occurring at the grid may result in outage of the electric supply to the boost pump 22, causing abnormal stop of the boost pump 22. In such a case, using a permanent magnet generator as an exciter for a synchronous generator being the generator 16 makes it possible to feed load current continuously to the armature of the generator 16 even if an abnormal event occurs in the grid. Thus, it is possible to maintain the electromagnetic torque of the generator 16.

Embodiments of the present invention were described in detail above, but the present invention is not limited thereto, and various amendments and modifications may be implemented within a scope that does not depart from the present invention which is defined by the appended claims.

## Claims

1. A hydraulic transmission (2) comprising:
a hydraulic pump (8) configured to pressurize working oil;
a hydraulic motor (10) configured to be driven by the working oil pressurized by the hydraulic pump (8);
a high pressure line (12) which connects an outlet side of the hydraulic pump (8) and an inlet side of the hydraulic motor (10);
a low pressure line (14) which connects an outlet side of the hydraulic motor (10) and an inlet side of the hydraulic pump (8);
a reservoir tank (18) for storing the working oil, the reservoir tank (18) being connected to the low pressure line (14); and
a boost pump (22) for feeding the working oil stored in the reservoir tank (18) to the low pressure line (14);
a first branch line (32) which is branched from the low pressure line (14) and which is communicated with a bearing or a seal of at least one of the hydraulic pump (8) or the hydraulic motor (10); and **characterized in that** the hydraulic transmission (2) further comprises
a shutoff valve (34) disposed in the first branch line (32) and configured to control supply of the working oil to the bearing or the seal from the low pressure line (14) via the first branch line (32),
and **in that** the hydraulic transmission (2) is configured such that the working oil is not supplied from the low pressure line (14) to the bearing or the seal of the at least one of the hydraulic pump (8) or the hydraulic motor (10) at least during abnormal stop of the boost pump (22), and
the shutoff valve (34) is configured to be in an open state during normal operation of the boost pump (22), and to be in a closed state during the abnormal stop of the boost pump (22) so as to shut off the supply of the working oil to the bearing or the seal from the low pressure line (14) via the first branch line (32).

2. The hydraulic transmission (2) according to claim 1,
wherein the shutoff valve (34) is a pilot check valve configured to be operated by a pressure in the low pressure line (14) serving as a pilot pressure, and
wherein the pilot check valve is configured to permit a flow to the bearing or the seal from the low pressure line (14) via the first branch line (32) when the pilot pressure is not less than a threshold value Pₜₕ, and to shut off the flow to the bearing or the seal from the low pressure line (14) via the first branch line (32) when the pilot pressure is less than the threshold value Pₜₕ.

3. The hydraulic transmission (2) according to claim 2,
wherein the pilot check valve is configured to obtain the pilot pressure from a portion of the low pressure line (14), the portion being disposed immediately after the boost pump (22).

4. The hydraulic transmission (2) according to any one of claims 1 to 3 further comprising
a low pressure accumulator connected to the low pressure line (14) and configured to reduce pressure fluctuation of the working oil in the low pressure line (14),
wherein the low pressure accumulator is configured to supply the working oil in the low pressure accumulator to the low pressure line (14) during the abnormal stop of the boost pump (22).

5. The hydraulic transmission (2) according to claim 4,
wherein the hydraulic pump (8) or the hydraulic motor (10) is configured to be capable of decreasing rotation speed to at least half of rotation speed in the normal operation in a period of time from when the boost pump (22) abnormally stops to when the pressure of the low pressure line (14) decreases to an initial charge pressure of the low pressure accumulator.

6. The hydraulic transmission (2) according to any one of claims 1 to 5, further comprising:
a high pressure accumulator connected to the high pressure line (12);
a bypass flow path which connects the high pressure line (12) and the low pressure line (14) without the hydraulic pump (8) and the hydraulic motor (10) disposed therebetween; and a bypass shutoff valve (48) disposed in the bypass flow path,
wherein the bypass shutoff valve (48) is configured to be in a closed state during the normal operation of the boost pump (22) and to be in an open state so as to allow the working oil to flow from the high pressure line (12) to the low pressure line (14) passing through the bypass flow path during the abnormal stop of the boost pump (22).

7. The hydraulic transmission (2) according to any one of claims 1 to 6, further comprising an auxiliary boost pump,
wherein the auxiliary boost pump is configured to start operation and suppress pressure decrease in the low pressure line (14) when the boost pump (22) stops abnormally.

8. A wind turbine power generating apparatus (1) comprising a wind turbine rotor (3) and a hydraulic transmission (2) connected to the wind turbine rotor (3),
wherein the hydraulic transmission (2) is the hydraulic transmission according to claim 1 and wherein the hydraulic pump (8) of the hydraulic transmission (2) is configured to be driven by the wind turbine rotor.

9. The wind turbine power generating apparatus (1) according to claim 8,
wherein the hydraulic pump (8) is configured to be capable of decreasing rotation speed to half of rotation speed in the normal operation within 15 seconds after the boost pump (22) stops abnormally, and
wherein the hydraulic transmission (2) is configured to maintain a pressure in the low pressure line (14) at not less than a threshold value for a period of time from when the boost pump (22) stops abnormally to at least when the rotation speed of the hydraulic pump (8) decreases to half of the rotation speed in the normal operation.

10. The wind turbine power generating apparatus (1) according to claim 8 or 9,
wherein the hydraulic motor (10) is configured to be capable of decreasing rotation speed to half of rotation speed in the normal operation within 60 seconds after the boost pump (22) stops abnormally, and
wherein the hydraulic transmission is configured to maintain the pressure in the low pressure line (14) at not less than a threshold value for a period of time from when the boost pump (22) stops abnormally to at least when the rotation speed of the hydraulic motor (10) decreases to half of the rotation speed in the normal operation.

11. An operation control method for a wind turbine power generating apparatus (1) according to claim 8 and **characterized in that** it comprises:
a detecting step of detecting abnormal stop of the boost pump (22); and
a speed-decreasing step of decreasing rotation speed of the hydraulic pump (8) or the hydraulic motor (10) while the working oil is not being supplied from the low pressure line (14) to a bearing or a seal of at least one of the hydraulic pump (8) or the hydraulic motor (10), after detecting the abnormal stop of the boost pump (22) in the detecting step.

12. The operation control method for a wind turbine power generating apparatus (1) according to claim 11,
wherein, in the speed-decreasing step, displacement of each of the hydraulic pump (8) and the hydraulic motor (10) is set to a minimum value while controlling pitch angle of the wind turbine rotor (3) so that aerodynamic braking force is applied to the wind turbine rotor (3).

## Patentansprüche

1. Hydraulisches Getriebe (2), umfassend:
eine Hydraulikpumpe (8), die dafür konfiguriert ist, Arbeitsöl mit Druck zu beaufschlagen,
einen Hydraulikmotor (10), der dafür konfiguriert ist, durch das durch die Hydraulikpumpe (8) mit Druck beaufschlagte Arbeitsöl angetrieben zu werden,
eine Hochdruckleitung (12), die eine Auslassseite der Hydraulikpumpe (8) und eine Einlassseite des Hydraulikmotors (10) verbindet,
eine Niederdruckleitung (14), die eine Auslassseite des Hydraulikmotors (10) und eine Einlassseite der Hydraulikpumpe (8) verbindet,
einen Vorratstank (18) zum Speichern des Arbeitsöls, wobei der Vorratstank (18) mit der Niederdruckleitung (14) verbunden ist, und
eine Verstärkerpumpe (22) zum Zuführen des in dem Vorratstank (18) gespeicherten Arbeitsöls zu der Niederdruckleitung (14),
eine erste Abzweigleitung (32), die von der Niederdruckleitung (14) abzweigt und mit einem Lager oder einer Dichtung von wenigstens einem von der Hydraulikpumpe (8) und dem Hydraulikmotor (10) in Strömungsverbindung steht, und
**dadurch gekennzeichnet, dass** das hydraulische Getriebe (2) ferner ein Absperrventil (34) umfasst, das in der ersten Abzweigleitung (32) angeordnet ist und dafür konfiguriert ist, die Zufuhr des Arbeitsöls zu dem Lager oder der Dichtung von der Niederdruckleitung (14) über die erste Abzweigleitung (32) zu steuern,
und dadurch, dass das hydraulische Getriebe (2) so konfiguriert ist, dass das Arbeitsöl zumindest während eines abnormalen Stopps der Verstärkerpumpe (22) nicht von der Niederdruckleitung (14) zu dem Lager oder der Dichtung des wenigstens einem von der Hydraulikpumpe (8) und dem Hydraulikmotor (10) zugeführt wird, und
das Absperrventil (34) dafür konfiguriert ist, während des normalen Betriebes der Verstärkerpumpe (22) in einem offenen Zustand zu sein und während des abnormalen Stopps der Verstärkerpumpe (22) in einem geschlossenen Zustand zu sein, so dass die Zufuhr des Arbeitsöls zu dem Lager oder der Dichtung von der Niederdruckleitung (14) über die erste Abzweigleitung (32) gesperrt wird.

2. Hydraulisches Getriebe (2) nach Anspruch 1,
wobei das Absperrventil (34) ein Pilot-Rückschlagventil ist, das dafür konfiguriert ist, durch einen Druck in der Niederdruckleitung (14), der als ein Pilotdruck dient, betätigt zu werden, und
wobei das Pilot-Rückschlagventil dafür konfiguriert ist, einen Fluss zu dem Lager oder der Dichtung von der Niederdruckleitung (14) über die erste Abzweigleitung (32) zu gestatten, wenn der Pilotdruck nicht unter einem Schwellenwert Pₜₕ liegt, und das Fließen zu dem Lager oder der Dichtung von der Niederdruckleitung (14) über die erste Abzweigleitung (32) abzusperren, wenn der Pilotdruck unter dem Schwellenwert Pₜₕ liegt.

3. Hydraulisches Getriebe (2) nach Anspruch 2,
wobei das Pilot-Rückschlagventil dafür konfiguriert ist, den Pilotdruck von einem Abschnitt der Niederdruckleitung (14) zu erhalten, wobei der Abschnitt unmittelbar nach der Verstärkerpumpe (22) angeordnet ist.

4. Hydraulisches Getriebe (2) nach einem der Ansprüche 1 bis 3, ferner umfassend
einen Niederdruckakkumulator, der mit der Niederdruckleitung (14) verbunden ist und dafür konfiguriert ist, Druckschwankungen des Arbeitsöls in der Niederdruckleitung (14) zu reduzieren,
wobei der Niederdruckakkumulator dafür konfiguriert ist, das Arbeitsöl in dem Niederdruckakkumulator während des abnormalen Stopps der Verstärkerpumpe (22) der Niederdruckleitung (14) zuzuführen.

5. Hydraulisches Getriebe (2) nach Anspruch 4,
wobei die Hydraulikpumpe (8) oder der Hydraulikmotor (10) dafür konfiguriert ist, in einem Zeitraum ab dem Moment, wo die Verstärkerpumpe (22) abnormal stoppt, bis zu dem Moment, wo der Druck der Niederdruckleitung (14) auf einen Anfangsladedruck des Niederdruckakkumulators abnimmt, die Drehzahl auf mindestens die Hälfte der Drehzahl des normalen Betriebes senken zu können.

6. Hydraulisches Getriebe (2) nach einem der Ansprüche 1 bis 5, ferner umfassend:
einen Hochdruckakkumulator, der mit der Hochdruckleitung (12) verbunden ist,
einen Umgehungsströmungspfad, der die Hochdruckleitung (12) und die Niederdruckleitung (14) verbindet, ohne dass die Hydraulikpumpe (8) und der Hydraulikmotor (10) dazwischen angeordnet sind, und
ein Umgehungsabsperrventil (48), das in dem Umgehungsströmungspfad angeordnet ist,
wobei das Umgehungsabsperrventil (48) dafür konfiguriert ist, während des normalen Betriebes der Verstärkerpumpe (22) in einem geschlossenen Zustand zu sein und während des abnormalen Stopps der Verstärkerpumpe (22) in einem offenen Zustand zu sein, damit das Arbeitsöl von der Hochdruckleitung (12) zu der Niederdruckleitung (14) strömen und dabei den Umgehungsströmungspfad passieren kann.

7. Hydraulisches Getriebe (2) nach einem der Ansprüche 1 bis 6, ferner umfassend
eine Zusatzverstärkerpumpe,
wobei die Zusatzverstärkerpumpe dafür konfiguriert ist, den Betrieb zu starten und eine Druckverringerung in der Niederdruckleitung (14) zu verringern, wenn die Verstärkerpumpe (22) abnormal stoppt.

8. Windturbinen-Energieerzeugungsvorrichtung (1), ferner umfassend
einen Windturbinenrotor (3) und ein hydraulisches Getriebe (2), das mit dem Windturbinenrotor (3) verbunden ist,
wobei das hydraulische Getriebe (2) das hydraulische Getriebe nach Anspruch 1 ist, und wobei die Hydraulikpumpe (8) des hydraulischen Getriebes (2) dafür konfiguriert ist, durch den Windturbinenrotor angetrieben zu werden.

9. Windturbinen-Energieerzeugungsvorrichtung (1) nach Anspruch 8,
wobei die Hydraulikpumpe (8) dafür konfiguriert ist, die Drehzahl innerhalb von 15 Sekunden, nachdem die Verstärkerpumpe (22) abnormal gestoppt hat, auf die halbe Drehzahl des normalen Betriebes senken zu können, und
wobei das hydraulische Getriebe (2) dafür konfiguriert ist, einen Druck in der Niederdruckleitung (14) über einen Zeitraum ab dem Moment, wo die Verstärkerpumpe (22) abnormal stoppt, bis zu mindestens dem Moment, wo die Drehzahl der Hydraulikpumpe (8) auf die Hälfte der Drehzahl des normalen Betriebes gesunken ist, auf nicht weniger als einem Schwellenwert zu halten.

10. Windturbinen-Energieerzeugungsvorrichtung (1) nach Anspruch 8 oder 9, wobei der Hydraulikmotor (10) dafür konfiguriert ist, die Drehzahl innerhalb von 60 Sekunden, nachdem die Verstärkerpumpe (22) abnormal gestoppt hat, auf die Hälfte der Drehzahl des normalen Betriebes verringern zu können, und
wobei das hydraulische Getriebe dafür konfiguriert ist, einen Druck in der Niederdruckleitung (14) über einen Zeitraum ab dem Moment, wo die Verstärkerpumpe (22) abnormal stoppt, bis zu mindestens dem Moment, wo die Drehzahl des Hydraulikmotors (10) auf die Hälfte der Drehzahl des normalen Betriebes gesunken ist, auf nicht weniger als einem Schwellenwert zu halten.

11. Betriebssteuerungsverfahren für eine Windturbinen-Energieerzeugungsvorrichtung (1) nach Anspruch 8, und **dadurch gekennzeichnet, dass** es umfasst:
einen Detektionsschritt des Detektierens eines abnormalen Stopps der Verstärkerpumpe (22) und
einen Drehzahlverringerungsschritt des Verringerns der Drehzahl der Hydraulikpumpe (8) oder des Hydraulikmotors (10), während das Arbeitsöl nicht von der Niederdruckleitung (14) zu einem Lager oder einer Dichtung von wenigstens einem von der Hydraulikpumpe (8) und dem Hydraulikmotor (10) zugeführt wird, nachdem der abnormale Stopp der Verstärkerpumpe (22) in dem Detektionsschritt detektiert wurde.

12. Betriebssteuerungsverfahren für eine Windturbinen-Energieerzeugungsvorrichtung (1) nach Anspruch 11,
wobei in dem Drehzahlverringerungsschritt eine Verdrängung sowohl der Hydraulikpumpe (8) als auch des Hydraulikmotors (10) auf einen Minimumwert eingestellt wird, während der Anstellwinkel des Windturbinenrotors (3) so gesteuert wird, dass eine aerodynamische Bremskraft auf den Windturbinenrotor (3) wirkt.

## Revendications

1. Transmission hydraulique (2) comportant :
une pompe hydraulique (8) configurée pour mettre sous pression de l'huile hydraulique ;
un moteur hydraulique (10) configuré pour être entraîné par l'huile hydraulique mise sous pression par la pompe hydraulique (8) ;
une conduite à haute pression (12) qui relie un côté de sortie de la pompe hydraulique (8) et un côté d'entrée du moteur hydraulique (10) ;
une conduite à basse pression (14) qui relie un côté de sortie du moteur hydraulique (10) et un côté d'entrée de la pompe hydraulique (8) ;
un réservoir (18) destiné à stocker l'huile hydraulique, le réservoir (18) étant relié à la conduite à basse pression (14) ; et
une pompe de gavage (22) destinée à alimenter la conduite à basse pression (14) avec de l'huile hydraulique stockée dans le réservoir (18);
une première conduite d'embranchement (32) qui est raccordée à la conduite à basse pression (14) et qui est en communication avec un palier ou un joint d'étanchéité depuis au moins la pompe hydraulique (8) ou le moteur hydraulique (10) ; et
**caractérisée en ce que** la transmission hydraulique (2) comporte en outre
une vanne d'arrêt (34) disposée dans la première conduite d'embranchement (32) et configurée pour commander l'alimentation en huile hydraulique du palier ou du joint d'étanchéité de la conduite à basse pression (14) par l'intermédiaire de la première conduite d'embranchement (32),
et **en ce que**
la transmission hydraulique (2) est configurée de telle sorte qu'un transfert d'huile hydraulique depuis la conduite à basse pression (14) jusqu'au palier ou au joint d'étanchéité de au moins la pompe hydraulique (8) ou le moteur hydraulique (10) est interrompu au moins pendant un arrêt anormal de la pompe de gavage (22), et
la vanne d'arrêt (34) est configurée pour être dans un état ouvert pendant un fonctionnement normal de la pompe de gavage (22), et pour être dans un état fermé pendant l'arrêt anormal de la pompe de gavage (22) de façon à couper l'alimentation en huile hydraulique du palier ou du joint d'étanchéité depuis la conduite à basse pression (14) par l'intermédiaire de la première conduite d'embranchement (32).

2. Transmission hydraulique (2) selon la revendication 1,
dans laquelle la vanne d'arrêt (34) est un clapet anti-retour pilote configuré pour être actionné par une pression dans la conduite à basse pression (14) servant de pression pilote, et
dans laquelle le clapet anti-retour pilote est configuré pour permettre un écoulement vers le palier ou le joint d'étanchéité depuis la conduite à basse pression (14) en passant par la première conduite d'embranchement (32) quand la pression pilote n'est pas inférieure à une valeur de seuil Pₜₕ, et pour arrêter l'écoulement jusqu'au palier ou au joint d'étanchéité depuis la conduite à basse pression (14) en passant par la première conduite d'embranchement (32) quand la pression pilote est inférieure à la valeur de seuil Pₜₕ.

3. Transmission hydraulique (2) selon la revendication 2,
dans laquelle le clapet anti-retour pilote est configuré pour obtenir la pression pilote depuis une partie de la conduite à basse pression (14), la partie étant disposée juste après la pompe de gavage (22).

4. Transmission hydraulique (2) selon l'une quelconque des revendications 1 à 3 comportant en outre
un accumulateur à basse pression relié à la conduite à basse pression (14) et configuré pour réduire une fluctuation de pression de l'huile hydraulique dans la conduite à basse pression (14),
dans laquelle l'accumulateur à basse pression est configuré pour permettre un transfert d'huile hydraulique de l'accumulateur à basse pression à la conduite à basse pression (14) pendant l'arrêt anormal de la pompe de gavage (22).

5. Transmission hydraulique (2) selon la revendication 4,
dans laquelle la pompe hydraulique (8) ou le moteur hydraulique (10) est configuré pour être capable de diminuer la vitesse de rotation au moins à la moitié de la vitesse de rotation dans le fonctionnement normal pendant un laps de temps depuis le moment où la pompe de gavage (22) s'arrête de manière anormale jusqu'au moment où la pression de la conduite à basse pression (14) diminue jusqu'à une pression de charge initiale de l'accumulateur à basse pression.

6. Transmission hydraulique (2) selon l'une quelconque des revendications 1 à 5, comportant en outre :
un accumulateur à haute pression relié à la conduite à haute pression (12) ;
un passage d'écoulement de dérivation qui relie la conduite à haute pression (12) et la conduite à basse pression (14) sans que la pompe hydraulique (8) et le moteur hydraulique (10) ne soient disposés entre elles ; et
une vanne d'arrêt de dérivation (48) disposée dans le passage d'écoulement de dérivation,
dans laquelle la vanne d'arrêt de dérivation (48) est configurée pour être dans un état fermé pendant le fonctionnement normal de la pompe de gavage (22) et pour être dans un état ouvert de façon à permettre à l'huile hydraulique de s'écouler depuis la conduite à haute pression (12) jusqu'à la conduite à basse pression (14) en passant par le passage d'écoulement de dérivation pendant l'arrêt anormal de la pompe de gavage (22).

7. Transmission hydraulique (2) selon l'une quelconque des revendications 1 à 6, comportant en outre une pompe de gavage auxiliaire,
dans laquelle la pompe de gavage auxiliaire est configurée pour commencer à fonctionner et pour supprimer une diminution de pression dans la conduite à basse pression (14) quand la pompe de gavage (22) s'arrête de manière anormale.

8. Eolienne (1) comportant un rotor d'éolienne (3) et une transmission hydraulique (2) reliée au rotor d'éolienne (3),
dans laquelle la transmission hydraulique (2) est la transmission hydraulique selon la revendication 1 et dans laquelle la pompe hydraulique (8) de la transmission hydraulique (2) est configurée pour être entraînée par le rotor d'éolienne.

9. Eolienne (1) selon la revendication 8,
dans laquelle la pompe hydraulique (8) est configurée pour être capable de diminuer une vitesse de rotation à la moitié de la vitesse de rotation dans le fonctionnement normal dans les 15 secondes après que la pompe de gavage (22) s'arrête de manière anormale, et
dans laquelle la transmission hydraulique (2) est configurée pour maintenir une pression dans la conduite à basse pression (14) à pas moins d'une valeur de seuil pendant un laps de temps depuis le moment où la pompe de gavage (22) s'arrête de manière anormale jusqu'à au moins le moment où la vitesse de rotation de la pompe hydraulique (8) diminue à la moitié de la vitesse de rotation dans le fonctionnement normal.

10. Eolienne (1) selon la revendication 8 ou 9,
dans laquelle le moteur hydraulique (10) est configuré pour être capable de diminuer une vitesse de rotation à la moitié de la vitesse de rotation dans le fonctionnement normal dans les 60 secondes après que la pompe de gavage (22) s'arrête de manière anormale, et
dans laquelle la transmission hydraulique est configurée pour maintenir la pression dans la conduite à basse pression (14) à pas moins d'une valeur de seuil pendant un laps de temps depuis le moment où la pompe de gavage (22) s'arrête de manière anormale jusqu'à au moins le moment où la vitesse de rotation du moteur hydraulique (10) diminue à la moitié de la vitesse de rotation dans le fonctionnement normal.

11. Procédé de commande du fonctionnement pour une éolienne (1) selon la revendication 8 et **caractérisé en ce qu'**il comporte :
une étape de détection destinée à détecter l'arrêt anormal de la pompe de gavage (22) ; et
une étape de diminution de vitesse destinée à diminuer la vitesse de rotation de la pompe hydraulique (8) ou du moteur hydraulique (10) lorsqu'un transfert d'huile hydraulique depuis la conduite à basse pression (14) jusqu'à un palier ou un joint d'étanchéité de au moins un de la pompe hydraulique (8) ou du moteur hydraulique (10) est interrompu, après détection de l'arrêt anormal de la pompe de gavage (22) dans l'étape de détection.

12. Procédé de commande du fonctionnement pour une éolienne (1) selon la revendication 11,
selon lequel, dans l'étape de diminution de vitesse, un déplacement de chacun de la pompe hydraulique (8) et du moteur hydraulique (10) est établi à une valeur minimum tout en commandant l'angle de pas du rotor d'éolienne (3) de telle sorte qu'une force de freinage aérodynamique est appliquée sur le rotor d'éolienne (3).
